# EUROPÄISCHE PATENTSCHRIFT

(11) **EP 3 334 012 B1**
(45) Veröffentlichungstag und Bekanntmachung des Hinweises auf die Patenterteilung: **04.05.2022**
(21) Anmeldenummer: 17001960.8
(22) Anmeldetag: 30.11.2017
(51) Int. Cl.: H02K 1/27, H02K 15/03, H01F 1/057, H01F 41/02, H02K 29/03, H01F 1/08

(54) **PERMANENTMAGNETROTOR FÜR EINE ELEKTRISCHE MASCHINE**
PERMANENT MAGNET ROTOR FOR AN ELECTRIC MACHINE
ROTOR À AIMANTS PERMANENTS POUR UNE MACHINE ÉLECTRIQUE

(30) Priorität: 07.12.2016 DE 102016014526
(43) Veröffentlichungstag der Anmeldung: 13.06.2018
(73) Patentinhaber: WILO SE, 44263 Dortmund (DE)
(72) Erfinder: Krengel, Martin, 44263 Dortmund (DE)
(74) Vertreter: Cohausz Hannig Borkowski Wißgott

(56) Entgegenhaltungen:
- EP-A2- 2 908 407
- DE-A1- 4 115 887
- DE-U1- 29 903 607
- US-A- 5 223 759
- US-A1- 2001 028 201
- US-A1- 2009 224 621

## Beschreibung

Die Erfindung betrifft einen Permanentmagnetrotor für eine elektrische Maschine mit konzentrierten Wicklungen, mit einem weichmagnetischen Kern und einer Anzahl umfänglich angeordneter Permanentmagnete, wobei in Umfangsrichtung zwischen zwei benachbarten Permanentmagneten jeweils ein Randabschnitt des Kerns liegt und die Permanentmagnete radial derart magnetisiert sind, dass radial außen gleich magnetisierte hartmagnetische Pole liegen und die Randabschnitte pseudomagnetische Pole entgegengesetzter Polarität zu den hartmagnetischen Polen ausbilden.

Permanentmagnetrotoren dieser Gattung sind allgemein bekannt und werden im Fachjargon als Folgepolrotor bezeichnet. Ein solcher Rotor ist beispielsweise aus der deutschen Patentanmeldung DE 102009058424 A1 bekannt. Die Anzahl der Permanentmagnete sind hier äquidistant über den Umfang des Rotors verteilt und radial identisch magnetisiert, so dass gleiche Pole radial außen liegen und hierzu entgegengesetzt gleiche Pole radial innen liegen. Da identische Pole sich gegenseitig abstoßen, werde die magnetischen Feldlinien durch das weichmagnetische Material des Kerns in die Bereiche bzw. Randabschnitte zwischen den Permanentmagneten gedrängt und bilden dort die pseudomagnetischen Pole aus. Diese entstehen somit durch Feldverdrängung im Kern.

Dokument DE 41 15 887 A1 offenbart einen Permanentmagnetrotor gemäß dem Oberbegriff des Anspruchs 1 und implizit ein Verfahren zur Herstellung eines Permanentmagnetrotors gemäß dem Oberbegriff des Anspruchs 17.

Dokument DE 299 03 607 U1 offenbart bogenförmige Permanentmagnete, die mittels Warmfließpressen hergestellt sind.

Folgepolrotoren haben den Vorteil, dass sie die Anzahl 2p an Rotorpolen (p ist die Polpaarzahl) durch die halbe Anzahl p an Permanentmagneten erreichen. So kann also beispielsweise ein vierpoliger Rotor mit nur zwei Permanentmagneten hergestellt werden. Hieraus resultiert ein erheblicher Kostenvorteil, da Permanentmagnete heutzutage für den Erhalt entsprechend starker magnetischer Pole aus seltenen Erden wie Neodym oder Samarium hergestellt sind und diese Magnetmaterialen am Markt besonders teuer sind. Verwendung finden hier beispielsweise Kobalt-Samarium oder Neodym-Eisen-Bor Verbindungen.

Die Herstellung dieser Magnete erfolgt in der Regel im Sinterverfahren. Dabei wird ein feinkörniges Pulver des Magnetmaterials unter hohem Druck mittels einer Metallpulverpresse zu einem Grünling verpresst, und anschließend in einem Sinterofen erhitzt, wobei die Temperatur jedoch unterhalb der Schmelztemperatur des Hauptbestanteils der Verbindung liegt. Es kommt somit nicht zu einer Schmelze, gleichwohl jedoch zu einem Verschmelzen der Pulverkörner an ihren Oberflächen miteinander. Dabei reduziert sich das Volumen des Ausgangsmaterials, da Porenräume ausgefüllt werden. Der ursprünglich pulvrige "Grünling" wird zum Festkörper. Anschließend erfolgt eine wie auch immer geartete mechanische Bearbeitung, um die gewünschte Endkontur des Magneten herzustellen. Einen Nord- und Südpol erhält dieser Festkörper anschließend dadurch, dass er in ein starkes elektromagnetisches Feld gebracht wird, in dem sich alle magnetischen Momente der Atome des Materials entlang der magnetischen Feldlinien dauerhaft parallel ausrichten.

In begrenzten Bereichen sind die magnetischen Momente der Atome des Magnetmaterials ohnehin bereits parallel ausgerichtet, d.h. ohne Einwirkung eines äußeren Feldes. Diese Bereiche werden nach dem Entdecker Weisssche-Bezirke genannt und bilden mikroskopisch kleine magnetisierte Domänen in den Kristallen eines ferromagnetischen Stoffes, wobei ihre Ausdehnung in linearer Richtung etwa zwischen 10µm und 1mm liegt und ihre Magnetisierung an dem Kristallgitter orientiert. Liegt die Korngröße des Magnetpulvers in der genannten Größenordnung oder darunter, so sind die Körner sogenannte Ein-Domänen-Teilchen, d.h. sie bilden und umfassen einen einzigen Weissschen Bezirk. In einer gesinterten Pulvermenge eines Magnetmaterials ist die Magnetisierung dieser Bezirke jedoch global betrachtet regellos. Die Grenzen zwischen den Bezirken bilden die sogenannten "Bloch-Wände". In einem steigenden äußeren Magnetfeld verschieben sich zunächst die Bloch-Wände zugunsten derjenigen Weiss-Bezirke, die im Wesentlichen in Richtung des äußeren Feldes ausgerichtet sind, so dass sich kleinere Weisssche-Bezirke zu einem größeren Bezirk zusammenfassen. Bei weiter steigendem äußeren Feld ändern schließlich immer mehr Weiss-Bezirke schlagartig ihre Polung (Barkhausen-Sprung) bis alle Bezirke identisch magnetisiert sind. Diese Magnetisierung geht jedoch bei weichmagnetischem Material mehr oder weniger schnell wieder verloren. Bei den meisten Dauermagneten bewirkt die Kopplung der Magnetisierung an die Hauptkristallachse eine magnetische Anisotropie. Durch die Ausrichtung der Pulverpartikel entlang der sogenannten Achse der leichten Magnetisierung (c-Achse der Kristalle) bleibt die Magnetisierung dauerhaft erhalten.

Um die Pulverpartikel gemäß einer Vorzugsrichtung entlang der c-Achse auszurichten, ist es beim Sinterverfahren bekannt, das Pulver kurz vor seinem Verdichten zu einem Pulverpressling einem durch eine Spule in der Presse erzeugtes Magnetfeld auszusetzen, so dass sich die einzelnen Pulverpartikel bzw. die Weissschen Bezirke ausrichten. Allerdings geht die dadurch erreichte Magnetisierung aufgrund des Sinterns bei einer Temperatur von ca. 1100°C, d.h. oberhalb der Curie-Temperatur wieder verloren. Es bleibt jedoch die Vorzugsausrichtung der c-Achsen der Kristallstruktur, gemäß derer die gesinterten Permanentmagnete wieder magnetisiert werden können, was in der Regel im Rotor verbauten zustand erfolgt.

Einen enormen Vorteil haben gattungsgemäße segmentierte Permanentmagnetrotoren auch gegenüber Rotoren mit einem Ringmagnet, da durch den weichmagnetischen Kern zwischen den Permanentmagneten Masse an Magnetmaterial eingespart werden kann, wodurch ggf. das Gewicht des Rotors entsprechend reduziert werden kann und sich damit die Anforderungen an die Lagerung der Rotorwelle verringern.

Folgepolrotoren haben jedoch die Eigenschaft, dass die hartmagnetischen Pole der Permanentmagnete eine höhere magnetische Flussdichte im Spalt zwischen Rotor und Stator erzeugen als die Randabschnitte des Kerns zwischen benachbarten Permanentmagneten. Bei elektrischen Maschinen mit Schleifenwicklungen ist dies unproblematisch, da hier Unsymmetrien im magnetischen Feld des Rotors ohne Einfluss bleiben. Anders ist dies jedoch bei elektrischen Maschinen mit konzentrierten Wicklungen, d.h. mit Statoren, die Spulen um die Statorzähne aufweisen, wie dies beispielsweise bei Synchronmaschinen oder bürstenlosen elektronisch kommutierten Motoren, sogenannten EC-Motoren oder BLDC (Brushless DC) -Motoren mit permanentmagnetischem Rotor der Fall ist. Hier machen sich Unsymmetrien im Magnetfeld des Rotors deutlich bemerkbar. Sie führen zu ausgeprägten Rastmomenten, wenn die hartmagnetischen Pole an einem erregten Statorzahn vorbeilaufen, was zum einen zu einer erhöhten Geräuschentwicklung, zum anderen zu einem schlechteren Wirkungsgrad führt. Dieser Effekt ist umso ausgeprägter, je weniger Pole der Rotor hat. Gestützt wird dieser Nachteil zudem durch die Verwendung gesinterter Permanentmagnete, da sich bei diesen eine rein diametrale Magnetisierung ergibt.

Es ist daher Aufgabe der vorliegenden Erfindung, einen gattungsgemäßen Permanentmagnetrotor derart weiterzubilden, dass er die Nachteile des Standes der Technik überwindet und bei einer elektrischen Maschine mit konzentrierten Wicklungen, insbesondere mit kleiner Polzahl, geringere Rastmomente erzeugt. Diese Aufgabe wird durch einen Permanentmagnetrotor mit den Merkmalen des

Anspruchs 1 gelöst. Die Aufgabe wird außerdem durch ein Verfahren zum Herstellen eines Permanentmagnetrotors mit den Merkmalen des Anspruchs 17 gelöst. Vorteilhafte Weiterbildungen sind in den Unteransprüchen angegeben und werden nachfolgend erläutert.

Der erfindungsgemäße Permanentmagnetrotor zeichnet sich dadurch aus, dass die Permanentmagnete durch Warmfließpressen eines Presslings (15) derart geformt sind, dass sich die Flussdichten der hartmagnetischen Pole und der pseudomagnetischen Pole am Außenumfang um weniger als 10%, insbesondere weniger als 5% voneinander unterscheiden. Durch eine besondere Form und Größe der Magnete kann erreicht werden, dass sie im Wesentlichen dieselbe magnetische Flussdichte aufweisen, wodurch ein im Wesentlichen symmetrisches magnetisches Feld mit sich abwechselnden magnetischen Polen über dem Umfang des Rotors, und insbesondere im radialen Luftspalt entsteht. Hierdurch wird dem Permanentmagnetrotor die Eignung für die Verwendung bei einer elektrischen Maschine mit konzentrierten Wicklungen verliehen. Die Gesamtmasse an Magnetmaterial im Rotor ist gegenüber konventionellen Rotoren mit Ringmagneten erheblich reduziert.

Durch das Warmfließpressen des Presslings wird, gegenüber der rein diametralen Vorzugsorientierung der c-Achsen bei Sintermagneten, eine Vorzugsrichtung normal zu derjenigen Richtung erreicht, in die der Pressling fließt. Dies ermöglicht es, eine gewünschte Vorzugsrichtung für die Ausrichtung der magnetischen Dipole genau zu definieren, nämlich indem die Pressrichtung und die Freiheit des Presslings zum Fließen festgelegt wird. Insbesondere können so innerhalb des Permanentmagneten abschnittsweise unterschiedliche Vorzugsrichtungen und damit auch unterschiedlicher Magnetisierungsrichtungen erreicht werden, was für den Erhalt hartmagnetischer und pseudomagnetischer Pole mit im Wesentlichen gleicher Flussdichte besonders hilfreich ist. Gegenüber einer rotorbezogen rein diametralen Vorzugsorientierung der c-Achsen kann mittels Warmfließpressen eine zumindest abschnittsweise radiale Vorzugsorientierung und letztendlich auch eine zumindest abschnittsweise radiale Magnetisierung erreicht werden. Dies hat den Vorteil, dass bei Ausrichtung des Rotors mit einem seiner Permanentmagnete direkt fluchtend unterhalb eines Statorzahns, die magnetischen Feldlinien nicht parallel in diesen Statorzahn verlaufen, sondern zueinander divergieren und damit bereits in zumindest einen Nachbarzahn des Stators streuen, bzw. sich über diesen Nachbarzahn schließen. Dies führt zu einem geringeren Rastmoment und damit zu einer laufruhigeren Maschine, mithin zu einem höheren Wirkungsgrad.

Ein weiterer Vorteil des Warmfließpressens besteht darin, dass die Permanentmagnete und damit der Rotor an sich einfacher und preiswerter im Vergleich zu Sintermagneten hergestellt werden kann, da keine Ausrichtung der magnetischen c-Achsen im Pulverzustand des Magnetmaterials erforderlich ist, wodurch sich der Aufbau und die Steuerung der Pulverpresse erheblich vereinfacht.

Das Warmfließpressen ist im Stand der Technik an sich bekannt. Es kann bei einer Temperatur zwischen 700°C und 850°C bei vergleichsweise geringem Druck im Bereich zwischen 10 und 15 kN/cm² erfolgen. Dem Warmfließpressen vorgelagert, ist ein Heißpressen eines Pulverpresslings, d.h. einer vorverdichteten Pulvermenge des Magnetmaterials. Durch das Heißpressen, das im Bereich zwischen 750°C und 900°C bei einem annähernd gleichen Druck erfolgen kann, schmelzen die Pulverkörner und füllen die zwischen ihnen vorhandenen luftgefüllten Freiräume aus, wodurch der Pulverpressling an Höhe verliert. Er erhält somit seine maximale Dichte. Der auf diese Weise hergestellte Heißpressling wird dann warmfließgepresst. Für den erfindungsgemäßen Permanentmagnetrotor kann dieses Verfahren zur Herstellung seiner Permanentmagnete verwendet werden.

Die erfindungsgemäßen Permanentmagnete liegen unmittelbar und lückenlos an je zwei Kernrandabschnitten an. Es ist somit für die erfindungsgemäße Flussdichtebeeinflussung nicht erforderlich, etwaige Flusssperren in Gestalt von Ausnehmungen und/ oder Ausfüllungen mit nicht-magnetischen Materialien wie beispielsweise Aluminium oder Luft zu verwenden, wie dies hin und wieder im Stand der Technik gelehrt wird. Dies vereinfacht die Herstellung des erfindungsgemäßen Permanentmagnetrotors.

Die Permanentmagnete können gemäß einer Ausführungsvariante in Taschen des Kerns eingeschoben sein und sogenannte Taschenmagnete, auch vergrabene Magnete genannt, bilden. Um jedoch an der Oberfläche des Rotors eine betraglich höhere Flussdichte zu erreichen, ist es sinnvoll, die Permanentmagnete gemäß einer anderen Ausführungsvariante auf der Oberfläche des Kerns, als sogenannte Oberflächenmagnete anzuordnen. Somit liegt zwischen der Rotoroberfläche und den Permanentmagneten kein Kernmaterial, wodurch auch keine Schwächung des magnetischen Feldes vorliegt.

Gemäß einer Ausführungsvariante können die Permanentmagnete bogenförmig sein, insbesondere eine Grundform aufweisen, die -im Querschnitt betrachtet- im Wesentlichen der Gestalt eines Kreisringsegments entspricht. Vorzugsweise ist der Querschnitt über die axiale Länge der Permanentmagnete gleich, so dass sie, bezogen auf ihre axiale Erstreckung in dieser Ausführungsvariante eine Grundform aufweisen, die zumindest abschnittsweise im Wesentlichen der Gestalt eines Kreiszylindersegments entspricht Die Kontur der Permanentmagnete ist somit sowohl radial außen als auch radial innen bogenförmig. Hierdurch wird eine radiale Magnetisierung der Permanentmagnete zumindest in einem Abschnitt erreicht, der zwischen der bogenförmigen Innenkontur und der bogenförmigen Außenkontur liegt. Dies bewirkt ein Auffächern der magnetischen Feldlinien, was bezogen auf den im Stator drehenden Rotor zu einem geringeren Rastmoment führt, da sich die in Umfangsrichtung am Endes des Permanentmagneten liegenden Feldlinien durch einen Nachbarzahn des erregten Statorzahns schließen. Wird dieser Nachbarzahn nun ebenfalls erregt, bewirkt er bereits ein Drehmoment auf den Rotor und zieht diesen folglich vom vorherigen Statorzahn weg. Der Lauf des Rotors wird dadurch ruhiger.

Die Herstellung eines bogenförmigen Permanentmagneten durch Warmfließpressen kann dadurch erfolgen, dass auf den Pressling in radialer Richtung von einem Oberstempel und/ oder einem Unterstempel einer Presse mit entsprechend der gewünschten Form gekrümmten, zueinander gerichteten Oberfläche ein Presskraft ausgeübt wird. Infolge dieser radialen Presskraft wird der Pressling derart plastisch umgeformt, dass er über den Unterstempel, mithin wenigstens in Umfangsrichtung fließt. Unter Reduzierung seiner Dicke erhöht sich dadurch seine Breite bzw. seine Erstreckung in Umfangsrichtung. Der Pressling kann eine Quaderform oder bereits eine an die gewünschte Endform angepasste Kontur, beispielsweise eine bogenförmige Kontur aufweisen. Im erfindungsgemäßen Rotor sind die Permanentmagnete somit derart umgeformt, dass sie zumindest abschnittsweise wenigstens in Umfangsrichtung geflossen sind.

Es versteht sich von selbst, dass die Abmessungen des Presslings so gewählt sein müssen, dass er in der entsprechenden Warmfließ-Pressform eingesetzt werden und in die gewünschte Richtung fließen kann. Zur Erreichung einer radialen Magnetisierung genügt es, wenn der Pressling nur in Umfangsrichtung fließt, da die Ausrichtung der c-Achsen rechtwinklig zur Fließrichtung ist. Dies bedeutet, dass der Pressling in axialer Richtung in der Pressform beschränkt sein kann, so dass kein Fließen in axialer Richtung erfolgt. Volumenelemente des Presslings, die entlang einer axialen Mittellinie liegen, erfahren dann jedoch keiner Umformung, so dass sich hier auch keine Vorzugsorientierung der Kristallstruktur ergibt. Entsprechend lassen sich diese Bereiche schlechter oder gar nicht magnetisieren. Es ist daher von Vorteil, wenn die Warmfließ-Pressform auch ein Fließen des Presslings in axialer Richtung zulässt, d.h. die axiale Länge der Warmfließ-Pressform größer ist als die axiale Länge des Presslings. In diesem Fall werden auch die Kristallachsen der entlang der genannten Mittellinie liegenden Volumenelemente des Presslings vorzugsgerichtet, so dass alle c-Achsen von Volumenelementen, die auf einer achsparallelen Linie liegen parallel zueinander ausgerichtet sind.

Erfindungsgemäß erstrecken sich die Permanentmagnete über einen Umfangswinkel, der größer ist, als ein durch die doppelte Permanentmagnetanzahl geteilter 360° Vollkreis. Der Umfangswinkel, der hier dem sogenannten Polwinkel entspricht, ist dabei bestimmungsgemäß derjenige Winkel, den zwei Strahlen einfassen, die radial durch die Rotorachse verlaufen und jeweils eins der äußersten Umfangsenden des Permanentmagneten tangieren. Da sich der Umfangswinkel des Permanentmagneten und der hierzu komplementäre Umfangswinkel des Kernrandabschnitts zu 360°/ p bei einer Anzahl p an Permanentmagnetanzahl ergänzen, bedeutet dies, dass der komplementäre Umfangswinkel entsprechend um das Maß kleiner wird, um das der Umfangswinkel der Permanentmagnete vergrößert wird. Somit liegen in der Vergrößerung des Polwinkels zwei Wirkungen. Gesamtseitlich betrachtet, wird durch die Vergrößerung des Polwinkels über 360°/2p bei p Permanentmagneten seitens der hartmagnetischen Polen radial außen die Flussdichte reduziert, weil sich der Fluss über eine größere Bogenlänge verteilt. Im Gegensatz hierzu müssen in Folge des kürzeren komplementären Umfangswinkels alle Feldlinien der radial innenliegenden weichmagnetischen Gegenpole durch die schmaleren Kernrandabschnitte zwischen den Permanentmagneten nach außen verlaufen, wodurch die magnetische Flussdichte bei den pseudomagnetischen Polen erhöht wird. Dies trägt ebenfalls zur Angleichung der Flussdichten der Pole bei. Gleichzeitig wird dadurch das Rastmoment verringert, weil der Umfangswinkel eines hartmagnetischen Pols des Rotors größer als der Umfangswinkel eines Statorpols ist.

Die Anzahl der Permanentmagnete ist zwei oder mehr. Insbesondere aber eignet sich der erfindungsgemäße Permanentmagnetrotor zur Herstellung einer vierpoligen elektrischen Maschine, wobei hierzu nur zwei Permanentmagnete erforderlich sind. Beispielsweise kann aber auch mit drei Magneten eine sechspolige Maschine gebildet werden.

Für eine Ausführungsvariante als vierpoliger Rotor mit zwei Permanentmagneten bedeutet dies beispielsweise, dass sich die Permanentmagnete über einen Umfangswinkel von mehr als 90° erstrecken. Vorzugsweise kann der Umfangswinkel zwischen 100° und 120°, insbesondere bei etwa 110° liegen. Entsprechend kann der komplementäre Umfangswinkel der Kernrandabschnitt weniger als 90° betragen, insbesondere zwischen 60° und 80°, vorzugsweise bei etwa 70° liegen, wodurch die Flussdichte der pseudomagnetischen Pole erhöht wird.

Eine Erhöhung der Flussdichte der pseudomagnetischen Pole kann gemäß einer Ausführungsvariante zusätzlich oder alternativ dadurch erreicht werden, dass sich die Permanentmagnete unter Ausbildung von Randsegmenten radial außen über einen Außenumfangswinkel erstrecken, der größer ist als ein Innenumfangswinkel, über den sie sich radial innen erstrecken. Dies bewirkt, dass die Permanentmagnete in Umfangsrichtung, d.h. zu den Seiten, Erweiterung von im Querschnitt betrachtet im Wesentlichen dreieckiger Grundform besitzen.

Im beispielhaften Fall kreisringsegmentförmiger bzw. kreiszylindersegmentförmiger Permanentmagnete liegen dann die Stirnseiten der zu den Seiten erweiterten Umfangsenden, d.h. der Randsegmente, nicht in einer durch die Rotorwelle verlaufenden Axialebene, d.h. einem Radius, wie dies bei reinen Kreisringsegmenten/ Kreiszylindersegmenten der Fall wäre, die durch radiale Teilung eines Ringes gebildet sind, sondern in einer Sekantialebene des Rotors. In Umfangsrichtung betrachtet, steht das radial Außen liegende Umfangsende gegenüber dem radial innenliegenden Umfangsende in Umfangsrichtung vor, so dass die Permanentmagnete durch ein reines kreisringsegmentförmiges/ kreiszylindersegmentförmiges Hauptsegment in der Mitte und sich daran anschließenden seitlichen Erweiterungen/ Randsegmenten, in Form von Dreiecken, gegebenenfalls mit bogenförmiger Außenkontur, gebildet sind.

Durch die randseitigen Erweiterungen, d.h. Randsegmente, wird erreicht, dass eine größere Kontaktfläche (Aufstandsfläche) der Permanentmagnete zum Kern vorliegt, an welcher die Permanentmagnete ihren radial innen liegenden hartmagnetischen Pol in den Kern einkoppeln. Hierdurch kann mehr Flussdichte der radial innenliegenden Pole der Permanentmagnete in den Kern eingeleitet werden. Die Flussdichte der pseudomagnetischen Pole wird dadurch weiter erhöht, um sie an die Flussdichte der hartmagnetischen Pole anzugleichen.

Dieser Effekt wird durch das Warmfließpressen erfindungsgemäß verstärkt, indem in den Randsegmenten eine magnetische Vorzugsrichtung vorgesehen wird, die diametral ist, d.h. dass die c-Achsen auf Sekanten des Rotors liegen. Dies kann dadurch erreicht werden, dass der Unterstempel nur einem mittleren Teilbereich eine gekrümmte Oberfläche aufweist und zu den Seiten jenseits dieser gekrümmten Oberfläche in gerade Abschnitte übergeht. Dies bewirkt, dass erfindungsgemäß Volumenelemente des mittleren Bereichs des Presslings beim Warmfließpressen entlang einer gekrümmten Bahn über die gekrümmte Oberfläche des Unterstempels fließen und Volumenelemente der Randsegmente gerade, bezogen auf einen Kreis sekantial fließen. Auf diese Weise wird ein Permanentmagnet erhalten, der in verschiedenen Bereichen unterschiedliche magnetische Vorzugsorientierungen, respektive Magnetisierungen aufweist, und zwar durch einen einzigen Arbeitsschritt. So liegt im mittleren Bereich des Permanentmagneten zwischen der bogenförmigen Außenkontur und der bogenförmigen Innenkontur eine radiale Vorzugsorientierung/ Magnetisierung vor, die durch den gekrümmten Abschnitt des Unterstempels entsteht, und in den Randsegmenten, die durch die geraden Abschnitte des Unterstempels gebildet werden, eine diametrale Vorzugsorientierung/ Magnetisierung vor. Infolge dieser diametralen Magnetisierung in den Randsegmenten wird in die Kernrandabschnitte lokal mehr Flussdichte des hartmagnetischen Innenpols der Permanentmagnete eingekoppelt und damit die Flussdichte global betrachtet an den Kernrandabschnitten erhöht.

Vorzugsweise ist der Außenumfangswinkel derart größer als der Innenumfangswinkel gewählt, dass die in Umfangsrichtung zum Kern orientierte rechte und linke Stirnseite der Randsegmente in einer gemeinsamen Ebene liegen, die parallel zu einer Axialebene durch die Rotorachse verläuft. Geometrisch betrachtet, wird hierdurch erreicht, dass sich der Kern in Richtung seiner Randabschnitte zwischen den Permanentmagneten aus Sicht der Rotorwelle nicht zunächst verjüngt und sich dann in den Randabschnitten öffnet. Magnetisch betrachtet, wird hierdurch der Weg verkürzt, entlang welchem sich die Magnetfeldlinien von der radial innenliegenden Seite der Permanentmagnete zu ihrer radial außenliegenden Umfangsseite durch die Randabschnitte schließen.

Neben den vorgenannten Maßnahmen zur Erhöhung der magnetischen Flussdichte bei den pseudomagnetischen Polen kann alternativ oder in Kombination eine Abschwächung der magnetischen Flussdichte bei den hartmagnetischen Polen erreicht werden. Vorzugsweise kann hierzu die Form der Permanentmagnete derart gewählt werden, dass die radiale Dicke der Permanentmagnete im in Umfangsrichtung betrachtet mittleren Bereich geringer gewählt sein, als jenseits dieses Bereichs. Mit anderen Worten sind bei dieser Ausführungsvariante die Permanentmagnete im radialen Querschnitt betrachtet in der Mitte am dünnsten. Da die Dicke eines Permanentmagneten in Magnetisierungsrichtung proportional zu seiner magnetischen Flussdichte ist, wird durch eine Reduzierung der radialen Dicke folglich auch eine Reduzierung der Flussdichte der hartmagnetischen Pole erreicht.

Untersuchungen haben gezeigt, dass eine radiale Dicke der Permanentmagnete im mittleren Bereich zwischen 20% und 35% des Radius eine ausreichende magnetische Flussdichte am Außenumfang der hartmagnetischen Pole bewirkt, und zu guten Wirkungsgraden führt. Vorzugsweise kann das Verhältnis der radialen Dicke der Permanentmagnete im mittleren Bereich zum Radius zwischen 0,25 und 0,3 liegen.

Zu den Seiten in Umfangsrichtung betrachtet, steigt die radiale Dicke der Permanentmagnete gegenüber der Mitte entsprechend an. Dies kann beispielsweise um ein Maß zwischen 5% und 15%, vorzugsweise um etwa 10% der radialen Dicke in der Mitte der Permanentmagnete erfolgen.

Die Reduzierung der Dicke im mittleren Bereich kann beispielsweise dadurch erfolgen, dass die Innenkontur der Permanentmagnete durch einen Kreisbogen eines Innenkreises definiert wird, dessen Zentrum oberhalb des Zentrums eines Außenkreises liegt, auf dem ein die Außenkontur der Permanentmagnete definierender Kreisbogen liegt, und dessen Radius entsprechend kleiner als der Radius des Außenkreises ist. Die Dicke der Permanentmagnete steigt somit zu den Seiten in Umfangsrichtung kontinuierlich an. Dies führt zu einer homogeneren Feldverteilung, und die Vorzugsorientierung der Kristallstruktur bleibt unbeeinträchtigt. Schließlich ist auch keine mechanische Nachbearbeitung des warmfließgepressten Presslings beispielsweise durch Abschleifen von Material erforderlich.

Als Magnetmaterial kann für die Permanentmagnete in bekannter Weise beispielsweise eine Verbindung aus Neodym-Eisen-Bor verwendet werden. Eine Menge dieses Materials kann als Magnetpulver beispielsweise mit einer mittleren Korngröße von 150 µm in einer Pressform bereitgestellt und darin verdichtet werden, so dass ein Pulverpressling erhalten wird. Dieser kann dann anschließend heißgepresst und der dann erhaltene Heißpressling warmfließgepresst werden, wie dies zuvor beschrieben ist. Anschließend können die Permanentmagnete in einem starken Magnetfeld eines Elektromagneten magnetisiert werden. Dies kann beispielsweise in ihrem im Rotor verbauten Zustand erfolgen.

Bei dem Kern kann es sich um ein einteiliges Paket aus einzelnen Blechen insbesondere Eisenbleche handeln, wie es im Stand der Technik allgemein bekannt ist. Es kann beispielsweise mit der sogenannten Stanzpaketiertechnik hergestellt sein. Diese Methode hat sich bewährt und gewährleistet eine einfache Fertigung. Alternativ kann der Kern aus einem gepressten Pulver, beispielsweise Eisenpulver bestehen. In diesem Fall ist es von Vorteil, den Kern aus zwei Halbschalen bestehend herzustellen. Gegenüber einem einstückigen, massiven Kern, der einen Hohlraum zur Hindurchführung der Rotorwelle aufweist, vereinfacht die Verwendung von Halbschalen das Pressen des Kerns und verhindert zudem, dass der Kern beim axialen Fügen der Rotorwelle bricht.

Vorzugsweise kann die Rotorwelle aus einem keramischen Material oder aus einem nichtmagnetischen Metall gebildet sein, beispielsweise aus austenitischem Edelstahl. Da diese Materialien einen hohen magnetischen Widerstand besitzen wird damit erreicht, dass sich der magnetische Fluss im Rotor durch die dynamischen Magnetfelder des Stators nicht im Kern zurückdrängen, d.h. radial nach innen drängen lässt. Somit bleiben die Flussdichten im Betrieb des Rotors gegenüber dem stationären Fall weitgehend stabil.

Gemäß einer Ausführungsvariante können die Permanentmagnete an ihren Umfangsenden radial außen Abflachungen derart aufweisen, dass der Übergang zum Kern unter Ausbildung einer Stufe erfolgt. Hierdurch werden Spitze Winkel vermieden, so dass die Herstellung der Permanentmagnete einfacher wird.

Geeigneterweise können sich die Permanentmagnete über einen Teil oder die gesamte axiale Länge des Rotors bzw. des Kerns erstrecken.

Bestimmungsgemäß ist der erfindungsgemäße Permanentmagnetrotor für einen Elektromotor mit konzentrierten Wicklungen geeignet und vorgesehen, insbesondere für einen Synchronmotor oder einen elektronisch kommutierten Motor. Somit betrifft die Erfindung auch einen solchen Elektromotor mit einem erfindungsgemäßen Permanentmagnetrotor, insbesondere einen elektronisch kommutierten Motor. Der Stator der Maschine besitzt geeigneterweise eine Anzahl an Statorzähnen, die größer als die Anzahl der Rotorpole ist. So kann der Stator bei einem vierpoligen Rotor beispielsweise sechs Statorzähne haben. Somit kann der Stator in bekannter Weise 3-phasig sein, wobei jede Phase zwei Statorwicklungen in Reihe aufweist. Bei einem 6-poligen Rotor, der aus drei Permanentmagneten gebildet sein kann, kann der Stator entsprechend 9 Zähen aufweisen, so dass drei Wicklungen pro Phase in Reihe vorliegen.

Ferner eignet sich der Permanentmagnetrotor ideal für den Einsatz in einem eine Pumpeneinheit einer Kreiselpumpe antreibenden Elektromotor, insbesondere in einem Nassläufermotor, bei der der Rotor in einer Flüssigkeit, insbesondere dem Fördermedium dreht.

Weitere Vorteile und Merkmale des erfindungsgemäßen Rotors werden nachfolgend anhand eines Ausführungsbeispiels und der beigefügten Figuren erläutert. Es zeigen:
- Figur 1:: Radialschnitt durch einen erfindungsgemäßen Permanentmagnetrotor
- Figur 2:: Axialschnitt durch den erfindungsgemäßen Permanentmagnetrotor
- Figur 3:: Querschnittsdarstellung eines erfindungsgemäßen, warmfließgepressten Permanentmagnets
- Figur 4a:: Darstellung gemäß Fig. 3 mit veranschaulichter Magnetisierung

- Figur 4b:: Veranschaulichung der Magnetisierung bei einem gesinterten Permanentmagneten
- Figur 5:: Ablauf des Herstellverfahrens
- Figur 6:: Veranschaulichung des Herstellverfahrens

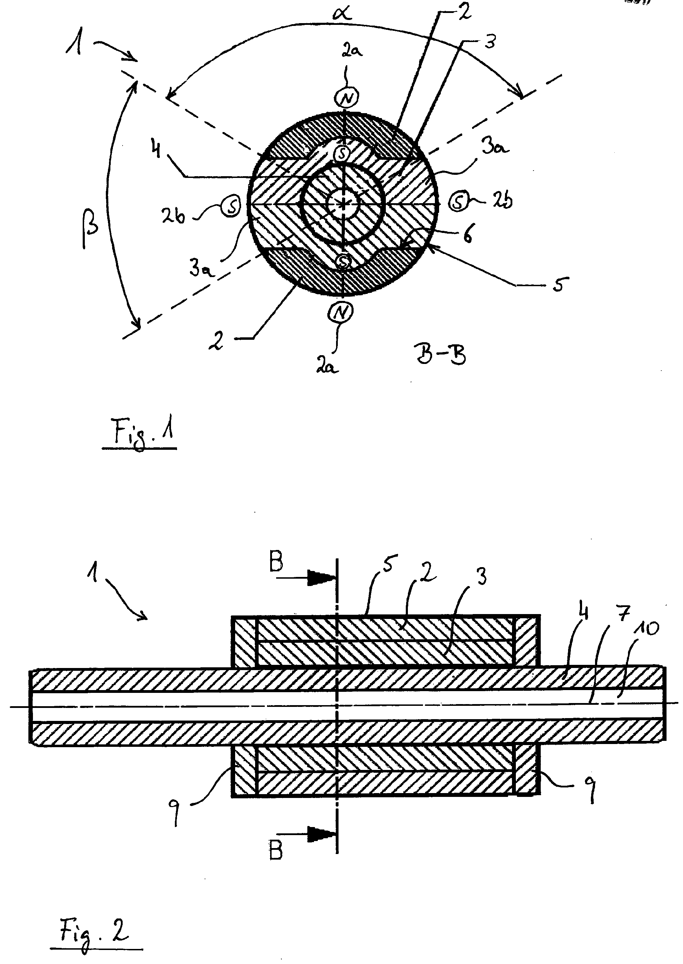

Figur 1 zeigt einen vierpoligen Permanentmagnetrotor 1 für eine elektrische Maschine im Querschnitt mit einem weichmagnetischen Kern 3 und zwei Permanentmagneten 2, die im Wesentlichen radial magnetisiert sind, so dass radial außen hartmagnetische Pole 2a gleicher Polarität liegen. Entsprechend liegen auch innen identische Pole. Rein beispielhaft sind in Figur 1 die Nordpole N am Außenumfang dargestellt, wohingegen die Südpole S entsprechend radial innen liegen. Die Permanentmagnete 2 können aus einem Magnetmaterial bestehen, das aus einer Verbindung mit seltenen Erden, beispielsweise einer Neodym-Eisen-Bor Verbindung gebildet ist. Sie sind als Oberflächenmagnete ausgebildet und entsprechend außen auf der Oberfläche des Kerns 3 aufgebracht.

Der Kern 3 ist hier zweiteilig ausgeführt, wobei er aus zwei pulvergepressten Eisenkörpern in Gestalt zweier Halbschalen besteht. Er kann alternativ jedoch auch als massiver Eisenkörper oder als Paket einzelner stanzpakettierter Eisenbleche ausgeführt sein.

Zwischen zwei benachbarten Permanentmagneten 2 liegt in Umfangsrichtung jeweils ein Randabschnitt 3a des Kerns 3, wobei die Permanentmagnete 2 und die Randabschnitte 3a unmittelbar und lückenlos aneinander angrenzen. In Umfangsrichtung wechseln sich die Permanentmagnete 2 und die Randabschnitte 3a somit regelmäßig ab.

Aufgrund der Tatsache, dass sich identische Pole abstoßen, werden die magnetischen Feldlinien der identisch magnetisierten Südpole S im Inneren des Permanentmagnetrotors 1 in die Kernabschnitten 3a verdrängt, so dass sich pseudomagnetische Pole 2b am Außenumfang der Kernabschnitte 3a ausbilden, die entsprechend zu den am Außenumfang der Permanentmagnete 2 ausgebildeten, hartmagnetischen Polen 2a entgegengesetzt polarisiert sind. Entsprechend wechseln sich in Umfangsrichtung Nord- und Südpol regelmäßig ab.

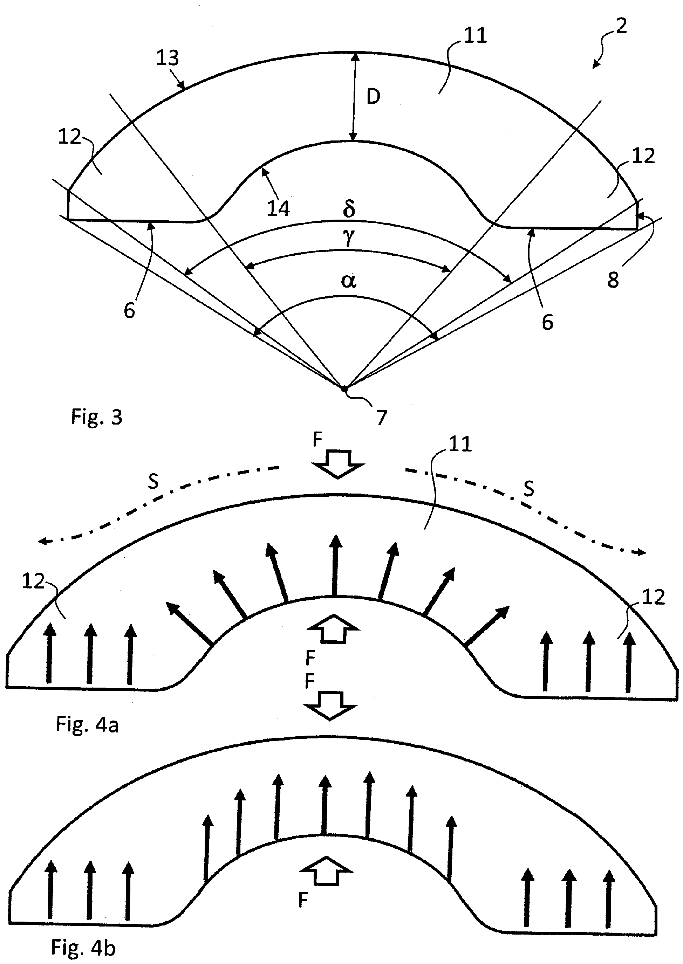

Der Permanentmagnetrotor 1 nach Figur 1 entspricht insoweit dem im Stand der Technik an sich bekannten Folgepolmotor. Damit die hartmagnetischen Pole 2a, nachfolgend auch Magnetpole 2a genannt, und die pseudomagnetischen Pole 2b, nachfolgend auch Eisenpole 2b genannt, annähernd dieselbe magnetische Flussdichte am Außenumfang des Permanentmagnetrotors 1 besitzen, d.h. annähernd eine magnetische Symmetrie in Umfangsrichtung des Rotors 1 vorliegt, sind die Permanentmagnete in ihrer Form und Größe sowie der Kern 3 in komplementärer Form und Größe gegenüber dem Stand der Technik besonders ausgebildet. Dies wird nachfolgend erläutert, insbesondere auch im Hinblick auf Figur 3, die einen einzelnen erfindungsgemäßen Permanentmagneten 2 zeigt.

Der erfindungsgemäße Permanentmagnetrotor 1 weist eine unsymmetrische Polteilung auf. So ist der Umfangswinkel a, über den sich die Permanentmagnete 2 erstrecken größer als der komplementäre Umfangwinkel β, über den sich die Kernabschnitte 3a erstrecken. Der erste Umfangswinkel a und der zweite Umfangswinkel β ergänzen sich bei dem hier dargestellten 4-poligen Rotor zu 180° (360°/p bei Anzahl p Permanentmagnete 2), so dass eine Vergrößerung des ersten Umfangswinkels α, der dem bekannten Polwinkel entspricht, und gleichzeitig eine Verkleinerung des zweiten Umfangswinkels β, nachfolgend auch Eisenwinkel genannt, erreicht wird. Wie Fig. 1 und 3 zeigen, ist der Umfangswinkel a derjenige Winkel, den zwei Strahlen einfassen, die radial durch die Rotorachse verlaufen und jeweils eins der äußersten Umfangsenden eines Permanentmagneten 2 tangieren. Er beträgt in den Figuren etwa 115°, wohingegen der komplementäre Umfangswinkel β etwa 65° beträgt.

Dies hat zweierlei technische Wirkungen. Je größer der Polwinkel a ist, desto größer ist der Außenumfang/ die Bogenlänge der Permanentmagnete 2, so dass sich der radial außenliegende hartmagnetische Nordpol 2a über eben diese vergrößerte Umfangsfläche verteilt und seine Flussdichte lokal betraglich geringer ist als bei einer kleineren Umfangsfläche (Integral der Flussdichte über der Austrittsfläche aus dem Magneten sei konstant). Das genaue Gegenteil erfolgt bei den Eisenpolen 2b, da eine Verkleinerung des Eisenwinkels gegenüber einer symmetrischen Polteilung zu einer Verdichtung der magnetischen Feldlinien in den Randabschnitten 3a führt, die sich vom innenliegenden Südpol zum außenliegenden Nordpol zu schließen versuchen. Die Rotorwelle 4 ist zudem aus einer Keramik, so dass sich hier keine Magnetfeldlinien hinein erstrecken. Die Feldlinien müssen also durch den vergleichsweise schmalen Bereich des Kerns 3 zwischen der Welle 4 und dem jeweiligen Permanentmagneten 2 zu den seitlichen Randabschnitten 3a, wobei es an der engsten Stelle sogar zu einer Flusssättigung im Eisen kommt. Diese hat den Vorteil, dass sich der Fluss infolge der dynamischen Wechselwirkung mit dem Statorfeld nicht zurückdrängen lässt.

Am Außenumfang der Randabschnitte 3a des Kerns 3 ist die Flussdichte der Eisenpole erhöht, weil sich der magnetische Fluss über eine schmalere Austrittsfläche/ Umfangsfläche des Kerns 3 verteilt. In Summe führt also ein größerer Polwinkel a gegenüber dem kleineren Eisenwinkel β radial außen am Rotor zu einer Erhöhung der magnetischen Flussdichte der pseudomagnetischen Pole 2b und einer Verringerung der magnetischen Flussdichte der hartmagnetischen Pole 2a, woraus insgesamt eine Symmetrierung der magnetischen Flussdichten über dem Umfang resultiert.

Wie sich insbesondere an Figur 3 erkennen lässt, sind die Permanentmagnete 2 im Querschnitt ferner derart geformt, dass sie aus einem im Wesentlichen kreisringssegmentförmigen mittleren Hauptsegment 11 und sich daran in Umfangsrichtung beidseits anschließenden Randsegmenten 12 bestehen. Die Form des Hauptsegments 11 ist mit Blick auf die Seiten im Wesentlichen dergestalt, wie man sie -im Querschnitt betrachtet- durch rein radiale Teilung eines Kreisrings erhält. An diese Form schließen sich dann die Randsegmente 12 in Umfangsrichtung an.

Die Randsegmente 12 werden dadurch gebildet, dass ein Außenumfangswinkel δ, über den sich die Permanentmagnete 2 radial außen erstrecken, größer ist als ein Innenumfangswinkel γ, über den sich die Permanentmagnete 2 radial innen erstrecken. Infolge von Abflachungen 8, die an den Umfangsenden der Permanentmagnete 2 radial außen vorhanden sind und in Verbindung mit dem Kern 3 dazu führen, dass der Übergang zum Kern 3 unter Ausbildung einer Stufe erfolgt, unterscheiden sich der Umfangswinkel/ Polwinkel α und der Außenumfangswinkel δ, welches letztendlich die Bogenlänge des Außenmantels der Permanentmagneten 2 definiert. Der Umfangswinkel/ Polwinkel α ist dabei entsprechend größer als der Außenumfangswinkel δ. Durch die Abflachungen 8 werden spitze Winkel vermieden, da sich diese schlecht pressen lassen.

Die Hauptsegmente 11 der Permanentmagnete 2 sind also jeweils an ihren radial außenliegenden Bereichen gegenüber den radial innen liegenden Bereich im Querschnitt betrachtet erweitert, so dass die Randsegmente 12 mit einem im Wesentlichen dreieckigen Querschnitt, allerdings bogenförmiger Außenkontur entstehen. Durch diese Randsegmente 12 wird ein zusätzlicher magnetischer Fluss der radial innen liegenden Pole der Permanentmagnete in den Kern 3 eingebracht und dadurch die Flussdichte der pseudomagnetischen Pole 2b erhöht.

Wie man anhand der Figuren 1 und 3 ferner erkennen kann, liegen die in Umfangsrichtung zum Kern 3 bzw. zu den Kernrandabschnitten 3a orientierten Stirnseiten 6 der Randsegmente 12 in einer gemeinsamen Ebene, die parallel zu einer Axialebene durch die Rotorachse 7 verläuft. Somit liegt aus Sicht der Rotorwelle 4 weder eine Verengung noch eine Verbreiterung des Kerns in den Randabschnitten 3a von innen nach außen vor. Die Stirnseiten 6 bzw. Aufstandsflächen liegen unmittelbar am Kern 3 an, so dass sich die an den Stirnseiten/ Kontaktflächen zu den Kernrandabschnitten 3a ausbildenden hartmagnetischen Pole, hier beispielhaft die Südpole S, einen zusätzlichen Beitrag zur Erhöhung der Flussdichte in den Randabschnitten 3a des Kerns 3 leisten.

Um eine weitere Angleichung der Flussdichten der Pole 2a, 2b zu erreichen, ist die radiale Dicke D des Hauptsegments 11 in seiner in Umfangsrichtung betrachtet liegenden Mitte gegenüber den Umfangsenden reduziert. Die radiale Dicke D nimmt also von der Mitte zu den Umfangsenden/ Stirnseiten 6 zu, vorzugsweise um bis zu 10%. Da die Dicke eines Permanentmagneten in Magnetisierungsrichtung die Magnetfeldstärke bestimmt, wird hierdurch eine Reduzierung der Flussdichte der hartmagnetischen Pole 2a am Außenumfang der Permanentmagnete 2 erreicht. Bei der in den Figuren dargestellten Ausführungsvariante ist das Verhältnis der radialen Dicke D der Permanentmagnete 2 im mittleren Bereich zum Radius der aus Kern 3 und Permanentmagneten 2 gebildeten Baueinheit etwa 0,26, also etwa ein Viertel. Die Reduzierung der Dicke D im mittleren Bereich ist dadurch gegeben, dass der Innenumfang 14 der Permanentmagnete 2 jeweils durch einen Kreisbogen eines jeweiligen Innenkreises definiert ist, dessen jeweiliges Zentrum außerhalb des Zentrums eines Außenkreises liegt, auf dem ein den Außenumfang 13 der Permanentmagnete jeweils definierender Kreisbogen liegt, und dessen Radius kleiner als der Radius des Außenkreises ist. Mit anderen Worten liegt das Zentrum der Innenkreise nicht auf der Rotationsachse 7. Bei dem in den Figuren 1 und 3 dargestellten oberen Permanentmagneten 2 ist also das Zentrum des Kreisbogens des Innenkreises oberhalb der Rotationsachse 7, bei dem in den Figuren 1 und 3 dargestellten unteren Permanentmagneten 2 entsprechend unterhalb der Rotationsachse 7 gelegen. Ferner ist der Radius des Kreisbogens 14 entsprechend kleiner als der Außenradius. Bei dem Ausführungsbeispiel der Figuren ist der Radius des Kreisbogens etwa 10% größer als der Radius der Rotorwelle 4.

Figur 2 zeigt einen Längsschnitt durch den erfindungsgemäßen Permanentmagnetrotor 1. Die Rotorwelle 7 ist als Hohlwelle mit einer axialen Durchgangsbohrung 10 ausgeführt. Sie erstreckt sich konzentrisch durch eine korrespondierende Bohrung im Kern 3 hindurch. Es ist erkennbar, dass sich die Permanentmagnete 2 über die gesamte axiale Länge des Kerns 3 erstrecken. An den axialen Stirnseiten des Kerns 3 verschließen Abdeckscheiben 9 das aus Kern 3 und Permanentmagneten 2 gebildete Rotorpaket. Außenumfänglich sind die Permanentmagnete 2 und die Randabschnitte 3a durch eine Hülse 5 umgreifend eingehaust. Dies kann beispielsweise aus einem unmagnetischen dünnen Blech, beispielsweise einem 0,2mm Edelstahlblech bestehen. Die Hülse 5 hält die Permanentmagnete 2 fest, so dass diese nicht geklebt oder auf sonstige Art befestigt werden müssen. Zudem schützt sie die Permanentmagnete und den Kern im Falle eines nasslaufenden Rotors vor dem Kontakt mit Flüssigkeit, insbesondere vor Korrosion.

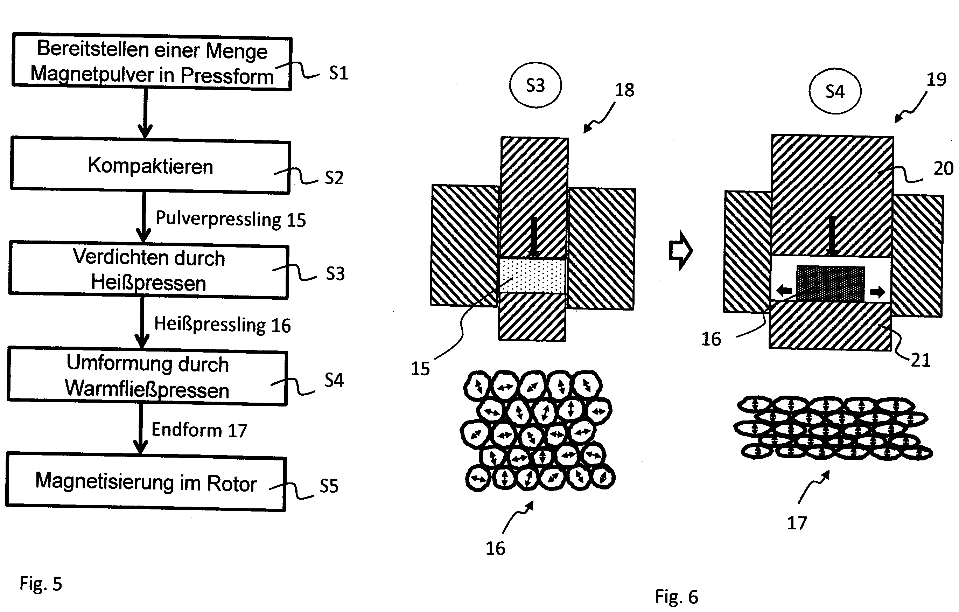

Die in dem erfindungsgemäßen Rotor 1 verwendeten Permanentmagnete 2 sind durch Warmfließpressen eines Presslings 15 hergestellt, der zuvor durch Heißpressen einer kompaktierten Pulvermenge des Magnetmaterials gewonnen wurde. Das Herstellungsverfahren ist in Figur 5 dargestellt.

Dabei wird zunächst eine Menge des Magnetmaterials in Pulverform in einer Pressform bereitgestellt, Schritt S1, und in dieser ersten Presse durch Pressen kompaktiert, Schritt S2. Dies führt zu einer Verdichtung des Magnetpulvers, wobei sein Volumen auf etwa 70% schrumpft. Das Kompaktieren/ Verdichten führt zu einem Pulverpressling 15, der anschließend bei vorzugsweise ca. 800°C und einem Druck von vorzugsweise etwa 10 und 15 kN/cm² in einer zweiten Presse 18 heißgepresst wird, Schritt S3. Dieser Schritt ist auch in Fig. 6 links veranschaulicht. Durch das Heißpressen S3 verliert der Pressling 15 weiter an Volumen, bzw. lediglich an Höhe, da es hier nicht zu einer Umformung kommt. Vielmehr bewirkt die Temperatur ein Aufschmelzen der Körner, zumindest an ihren Oberflächen, so dass das Magnetmaterial durch die Presskraft in die luftgefüllten Freiräume zwischen den Körnern gedrückt wird und diese ausfüllt.

Der so erhaltene Heißpressling 16 wir sodann warmfließgepresst, Schritt S4. Bei diesem thermisch-mechanischen Umformschritt erfolgt eine plastische Verformung des Heißpresslings 16 in einer Pressform einer dritten Presse 19, bei der er in die Endform 17 des Permanentmagneten 2 fließt. Das Warmfließpressen S4 erfolgt beispielsweise bei ca. 800°C und einem Druck von vorzugsweise etwa 10 und 15 kN/cm². Anschließend wird der Permanentmagnet 2 am Kern 3 montiert und der Rotor 1 einem starken Magnetfeld von mehreren Tesla eines Elektromagneten magnetisiert, Schritt S5.

Die Durchführung und das Ergebnis des Warmfließpressens sind in Fig. 6 rechts anhand der Herstellung eines herkömmlichen quaderförmigen Permanentmagneten dargestellt. Die Presse 19 umfasst hier einen Oberstempel 20 sowie axial gegenüberliegend einen Unterstempel 21, die gemeinsam mit Seitenwänden die Pressform definieren, welche zu den Seiten größer als der Heißpressling 16 ist. Der Oberstempel 20 presst nun den Heißpressling gegen den Unterstempel, so dass er in Richtung der dicken Pfeile zu den Seiten fließt. Mikroskopisch bewirkt dies ein Bildung von Plättchen, die in Richtung zur Richtung der ausgeübten äußeren Presskraft gestapelt und in Fließrichtung gestreckt sind. Dies wiederum bewirkt eine Ausrichtung der magnetischen Dipole, die durch die Orientierung zur c-Achsen der Kristallstruktur gegeben und durch die Doppelpfeile in den Plättchen in Figur 6 veranschaulicht ist. Wachstum und Stapelung der Plättchen sind verantwortlich für die magnetische Ausrichtung. Es zeigt sich, dass alle c-Achsen (Doppelpfeile) bei der warmfließgepressten Endform 17 normal zur Fließrichtung orientiert sind. Im Vergleich hierzu sind die c-Achsen beim Heißpressling 16, Fig. 6 Bild links, regellos orientiert. Die Orientierung bildet eine magnetische Vorzugsrichtung, gemäß derer die Magnetisierung in Schritt S5 erfolgt. Somit ist letztendlich auch die Magnetisierung des durch Warmfließpressen hergestellten Permanentmagneten senkrecht zur Richtung, in die der Magnetwerkstoff zuvor geflossen war.

Dies ermöglicht es, eine gewünschte Vorzugsrichtung für die Ausrichtung der magnetischen Dipole genau zu definieren, nämlich indem die Pressrichtung und die Freiheit des Presslings zum Fließen festgelegt wird. Insbesondere können so innerhalb des Permanentmagneten abschnittsweise unterschiedliche Vorzugsrichtungen und damit auch unterschiedlicher Magnetisierungsrichtungen erreicht werden, was für den Erhalt hartmagnetischer und pseudomagnetischer Pole mit im Wesentlichen gleicher Flussdichte besonders hilfreich ist.

Die Herstellung eines bogenförmigen Permanentmagneten 2, wie er in den Figuren 1 und 3 dargestellt ist, durch Warmfließpressen erfolgt z.B. derart, dass die Unterseite des Oberstempels 20 konkav gekrümmt ist, um die Außenkontur 13 des Magneten 2 auszubilden, und die Oberseite der Unterstempel 21 teilweise konvex gekrümmt ist, um entsprechend die Innenkontur 14 des Magneten 2 auszubilden, wobei vom Oberstempel 20 und/ oder Unterstempel 21 eine Presskraft in radialer Richtung auf den Heißpressling 16 ausgeübt wird. Infolge dieser radialen Presskraft wird der Heißpressling 16 derart plastisch umgeformt, dass er über den Unterstempel 21 in Umfangsrichtung sowie in axialer Richtung fließt. Um hierbei ein Anhaften des Magnetmaterials an der Pressform zu vermeiden, kann ein Schmiermittel auf die Pressform aufgebracht sein, beispielsweise Grafit oder Bornitrid.

Die durch das Warmfließpressen erfindungsgemäß erreichte magnetische Vorzugsorientierung ist in Fig. 4a dargestellt. Fig. 4b stellt dieser Orientierung die bei gleicher Magnetform durch herkömmliches Sintern erhältliche Ausrichtung der magnetischen Dipole gegenüber. Fig. 4b veranschaulicht, dass bei einem gesinterten Permanentmagneten in allen Bereichen nur eine rein diametrale Orientierung der magnetischen Dipole bzw. der c-Achsen vorliegt.

Gegenüber dieser Orientierung wird mittels Warmfließpressen eine zumindest abschnittsweise radiale Vorzugsorientierung erreicht, wie sie in Fig. 4a im mittleren Bereich 11 des Permanentmagneten 2 veranschaulicht ist, der zwischen der bogenförmigen Innenkontur 14 und der bogenförmigen Außenkontur 13 liegt. Nach der Magnetisierung des Rotors 1, Schritt S5, erstrecken sich somit die magnetischen Feldlinien fächerartig divergierend aus dem hartmagnetischen Pole 2a radial hinaus. Dies hat den Vorteil, dass bei Ausrichtung des Rotors 1 mit einem seiner Permanentmagnete 2 direkt fluchtend unterhalb eines Statorzahns die magnetischen Feldlinien nicht parallel in diesen Statorzahn hineinlaufen, wie dies bei der diametralen Magnetisierung gemäß Fig. 4b der Fall wäre. Durch das Auffächern der Feldlinien entlang des ohnehin verbreiterten Pols interagieren sie bereits während der Bestromung des einen Statorzahns mit dem Nachbarzahn des Stators, was zu einem geringeren Rastmoment, zu einer größeren Laufruhe und mithin zu einem höheren Wirkungsgrad führt.

Wie zuvor beschrieben, besitzen die erfindungsgemäßen Permanentmagnete 2 eine besondere Form, mit der eine Angleichung der magnetischen Flussdichte der pseudomagnetischen Pole 2b an die Flussdichte der hartmagnetischen Pole 2a erreicht wird, u.a. durch Erhöhung der Flussdichte der pseudomagnetischen Pole 2b infolge einer Erweiterung der bogenförmigen Permanentmagnete 2 durch Ausbildung von Randsegmenten 12 an den Umfangsenden. Die Flussdichte der pseudomagnetischen Pole 2b wird ferner durch das Warmfließpressen erhöht, indem in den Randsegmenten 12 eine diametrale magnetische Vorzugsrichtung vorgesehen wird.

Diese diametrale Orientierung wird dadurch erhalten, dass der Unterstempel 21 nur in einem mittleren Teilbereich eine konvex gekrümmte Oberfläche aufweist und zu den Seiten jenseits dieser gekrümmten Oberfläche in gerade Abschnitte übergeht. Somit fließen Volumenelemente des mittleren Bereichs 11 des Heißpresslings 16 beim Warmfließpressen S4 entlang einer gekrümmten Bahn über die gekrümmte Oberfläche des Unterstempels 21, wohingegen andere Volumenelemente der Randsegmente 12 gerade, insbesondere bezogen auf den Rotor sekantial fließen. Die Fließrichtung ist in Fig. 4a durch den strich-punktierten Pfeil S veranschaulicht. Der Pfeil F deutet die radiale Presskraft an.

Auf diese Weise wird ein Permanentmagnet 2 gemäß Fig. 4a erhalten, der in verschiedenen Bereichen unterschiedliche magnetische Vorzugsorientierungen, respektive Magnetisierungen aufweist. So liegt im mittleren Bereich 11 des Permanentmagneten 2 eine radiale Vorzugsorientierung/ Magnetisierung vor, die durch den gekrümmten Abschnitt des Unterstempels 21 entsteht, und in den Randsegmenten 12, die durch die geraden Abschnitte des Unterstempels 21 gebildet werden, eine diametrale Vorzugsorientierung/ Magnetisierung vor. Infolge dieser diametralen Magnetisierung in den Randsegmenten 12 wird in die Kernrandabschnitte 3a lokal mehr Flussdichte des hartmagnetischen Innenpols der Permanentmagnete 2 eingekoppelt und damit die Flussdichte global betrachtet an den Kernrandabschnitten 3a erhöht.

Untersuchungen haben gezeigt, dass sich bei dem erfindungsgemäßen Rotor gemäß der Figuren 1 bis 4a die magnetischen Flussdichten jeweils in der Mitte der hartmagnetischen Pole 2a und der pseudomagnetischen Pole um weniger als 5% unterscheiden. Er ist somit hervorragend für eine Maschine mit konzentrierten Wicklungen, insbesondere für permanentmagnetische Synchronmotoren oder elektronisch kommutierte Elektromotoren wie BLDC-Motoren.

## Patentansprüche

1. Permanentmagnetrotor (1) für eine elektrische Maschine, mit einem weichmagnetischen Kern (3) und einer Anzahl umfänglich angeordneter Permanentmagnete (2), wobei in Umfangsrichtung zwischen zwei benachbarten Permanentmagneten (2) jeweils ein Randabschnitt (3a) des Kerns (3) liegt und die Permanentmagnete derart magnetisiert sind, dass radial außen gleich magnetisierte hartmagnetische Pole (2a) liegen und die Randabschnitte (3a) pseudomagnetische Pole (2b) entgegengesetzter Polarität zu den hartmagnetischen Polen (2a) ausbilden, **dadurch gekennzeichnet, dass** die Permanentmagnete (2) jeweils durch Warmfließpressen eines Presslings (15) in eine Bogenform derart geformt sind, dass Volumenabschnitte des mittleren Bereichs (11) entlang einer gekrümmten Bahn und Volumenabschnitte der Enden unter Ausbildung von Randsegmenten (12) bezogen auf den Rotor (1) sekantial geflossen sind, so dass die magnetische Orientierung im mittleren Bereich (11) radial und in den Randsegmenten (12)diametral ist, dass sich die Permanentmagnete (2) jeweils über einen Umfangswinkel erstrecken, der größer ist, als der dazu komplementäre Umfangswinkel, über den sich jeweils die Randabschnitte (3a) des Kerns (3) erstrecken, und dass sich die Flussdichten der hartmagnetischen (2a) und pseudomagnetischen (2b) Pole am Außenumfang um weniger als 10%, insbesondere weniger als 5% voneinander unterscheiden.

2. Permanentmagnetrotor (1) nach Anspruch 1, **dadurch gekennzeichnet, dass** die Permanentmagnete (2) auf der Oberfläche des Kerns (3) angeordnet sind.

3. Permanentmagnetrotor (1) nach Anspruch 1 oder 2, **dadurch gekennzeichnet, dass** die Permanentmagnete (2) eine Grundform aufweisen, die im Wesentlichen der Gestalt eines Kreisringsegments entspricht.

4. Permanentmagnetrotor (1) nach Anspruch 3, **dadurch gekennzeichnet, dass** die Permanentmagnete (2) durch eine radiale Presskraft derart umgeformt sind, dass sie zumindest abschnittsweise wenigstens in Umfangsrichtung geflossen sind.

5. Permanentmagnetrotor (1) nach einem der vorherigen Ansprüche, **dadurch gekennzeichnet, dass** der Pressling (15) eine bogenförmige Kontur aufweist.

6. Permanentmagnetrotor (1) nach einem der vorherigen Ansprüche, **dadurch gekennzeichnet, dass** sich die Permanentmagnete (2) über einen Umfangswinkel von mehr als 90°, insbesondere bis 120° erstrecken, und sich die Randabschnitte (3a) über einen komplementären Umfangsabschnitt von weniger als 90°, insbesondere nur maximal 60° erstrecken.

7. Permanentmagnetrotor (1) nach einem der vorherigen Ansprüche, **dadurch gekennzeichnet, dass** sich die Permanentmagnete (2) radial außen über einen Außenumfangswinkel (α, δ) erstrecken, der größer ist als ein Innenumfangswinkel (γ), über den sie sich radial innen erstrecken.

8. Permanentmagnetrotor (1) nach Anspruch 7, **dadurch gekennzeichnet, dass** die in Umfangsrichtung zum Kern (3) orientierten Stirnseiten (6) der Randsegmente (12) in einer gemeinsamen Ebene liegen, die parallel zu einer Axialebene durch die Rotorachse (7) verläuft.

9. Permanentmagnetrotor (1) nach einem der vorherigen Ansprüche, **dadurch gekennzeichnet, dass** die radiale Dicke der Permanentmagnete (2) im in Umfangsrichtung betrachtet mittleren Bereich (11) geringer ist, als jenseits dieses Bereichs.

10. Permanentmagnetrotor (1) nach Anspruch 9, **dadurch gekennzeichnet, dass** ein den Innenradius der Permanentmagnete (2) beschreibender Kreis ein Zentrum aufweist, das zum Zentrums eines den Außenradius der Permanentmagnete (2) beschreibenden Kreises radial nach außen versetzt ist

11. Permanentmagnetrotor (1) nach einem der vorherigen Ansprüche, **dadurch gekennzeichnet, dass** der Kern (3) aus einem Paket einzelner Bleche, insbesondere Eisenbleche gebildet ist.

12. Permanentmagnetrotor (1) nach einem der vorherigen Ansprüche, **dadurch gekennzeichnet, dass** die Rotorwelle (4) keramisch oder aus einem nichtmagnetischen Metall gebildet ist.

13. Permanentmagnetrotor (1) nach einem der vorherigen Ansprüche, **dadurch gekennzeichnet, dass** die Permanentmagnete (2) an ihren Enden radial außen Abflachungen (8) derart aufweisen, dass der Übergang zum Kern (3) unter Ausbildung einer Stufe erfolgt.

14. Elektromotor mit konzentrierten Wicklungen **gekennzeichnet durch** einen Permanentmagnetrotor (1) nach einem der Ansprüche 1 bis 14, dessen Anzahl an Permanentmagneten (2) kleiner als die Anzahl der Wicklungen ist.

15. Elektromotor nach Anspruch 14, **dadurch gekennzeichnet, dass** er elektronisch kommutiert ist.

16. Kreiselpumpe mit einer Pumpeneinheit und einem diese antreibenden Elektromotor, **gekennzeichnet durch** einen Elektromotor nach einem der Ansprüche 14oder 15.

17. Verfahren zur Herstellung eines Permanentmagnetrotors (1) für eine elektrische Maschine, mit einem weichmagnetischen Kern (3) und einer Anzahl umfänglich angeordneter Permanentmagnete (2), wobei in Umfangsrichtung zwischen zwei benachbarten Permanentmagneten (2) jeweils ein Randabschnitt (3a) des Kerns (3) liegt und die Permanentmagnete derart magnetisiert sind, dass radial außen gleich magnetisierte hartmagnetische Pole (2a) liegen und die Randabschnitte (3a) pseudomagnetische Pole (2b) entgegengesetzter Polarität zu den hartmagnetischen Polen (2a) ausbilden, **dadurch gekennzeichnet, dass** die Permanentmagnete (2) jeweils durch Warmfließpressen eines Presslings (15) bogenförmig derart geformt werden, dass Volumenabschnitte des mittleren Bereichs (11) entlang einer gekrümmten Bahn und Volumenabschnitte der Enden unter Ausbildung von Randsegmenten (12) bezogen auf den Rotor (1) sekantial fließen, so dass die magnetische Orientierung im mittleren Bereich (11) radial und in den Randsegmenten (12) diametral ist, dass sich die Permanentmagnete (2) jeweils über einen Umfangswinkel erstrecken, der größer ist, als der dazu komplementäre Umfangswinkel, über den sich jeweils die Randabschnitte (3a) des Kerns (3) erstrecken, und dass sich die Flussdichten der hartmagnetischen (2a) und pseudomagnetischen (2b) Pole am Außenumfang um weniger als 10%, insbesondere weniger als 5% voneinander unterscheiden.

## Claims

1. Permanent magnet rotor (1) for an electric machine with a soft magnetic core (3) and a number of circumferentially arranged permanent magnets (2), in which an edge section (3a) of the core (3) lies respectively between two permanent magnets (2) that are adjacent to each other in the circumferential direction and the permanent magnets are magnetised so that the hard magnetic poles (2a) with the same magnetisation lie radially on the outside and the edge sections (3a) form pseudomagnetic poles (2b) with a polarity opposite to the hard magnetic poles (2a), **characterised by** the permanent magnets (2) respectively being formed by hot extrusion pressing of a blank (15) in a curved shape so that the volume parts of the centre zone (11)- along a curved path - and the volume parts of the ends - in the formation of edge segments (12) - flow secantially in reference to the rotor (1), so that the magnetic orientation is radial in the centre zone (11) and diametrical in the edge segments (12), the permanent magnets (2) respectively extend over a peripheral angle that is larger than the complementary peripheral angle over which the edge segments (3a) of the core (3) respectively extend, and the flux densities of the hard magnetic (2a) and pseudomagnetic (2b) poles on the outer circumference differ from each other by less than 10%, in particular by less than 5%.

2. Permanent magnet rotor (1) according to claim 1, **characterised by** the permanent magnets (2) being arranged on the surface of the core (3).

3. Permanent magnet rotor (1) according to claim 1 or 2, **characterised by** the permanent magnets (2) exhibiting a basic shape that essentially corresponds to the form of a circular ring segment.

4. Permanent magnet rotor (1) according to claim 3, **characterised by** the permanent magnets (2) being shaped by a radial pressing force so that they flow at least in segments and at least in the circumferential direction.

5. Permanent magnet rotor (1) according to one of the preceding claims, **characterised by** the blank (15) exhibiting a curved contour.

6. Permanent magnet rotor (1) according to one of the preceding claims, **characterised by** the permanent magnets (2) extending over a peripheral angle of more than 90°, notably up to 120°, and the edge sections (3a) extending over a complementary peripheral section of less than 90°, notably a maximum of 60°.

7. Permanent magnet rotor (1) according to one of the preceding claims, **characterised by** the permanent magnets (2) extending radially on the outside over an outer peripheral angle (α, δ) that is greater than an inner peripheral angle (γ) over which they extend radially on the inside.

8. Permanent magnet rotor (1) according to claim 7, **characterised by** the face ends (6) of the edge segments (12) oriented in the circumferential direction towards the core (3) lying in the same plane, which runs parallel to an axial plane through the rotor axis (7).

9. Permanent magnet rotor (1) according to one of the preceding claims, **characterised by** the radial thickness of the permanent magnets (2) in the centre zone (11) viewed in the circumferential direction being less than outside this zone.

10. Permanent magnet rotor (1) according to claim 9, **characterised by** a circle describing the inner radius of the permanent magnets (2) having a centre that is radially offset to the outside relative to the centre of a circle describing the outer radius of the permanent magnets (2).

11. Permanent magnet rotor (1) according to one of the preceding claims, **characterised by** the core (3) being formed by a package of individual plates, notably iron plates.

12. Permanent magnet rotor (1) according to one of the preceding claims, **characterised by** the rotor shaft (4) being made of ceramics or a nonmagnetic metal.

13. Permanent magnet rotor (1) according to one of the preceding claims, **characterised by** the permanent magnets (2) having radial outside flats (8) on their ends so that the transition to the core (3) forms a step.

14. Electric motor with concentrated windings **characterised by** a permanent magnet rotor (1) according to one of the claims 1 through 14, having a number of permanent magnets (2) that is less than the number of windings.

15. Electric motor according to claim 14, **characterised by** electronic commutation.

16. Centrifugal pump with a pump unit and an electric motor driving the same, **characterised by** an electric motor according to one of the claims 14 or 15.

17. Method for manufacturing a permanent magnet rotor (1) for an electric machine with a soft magnetic core (3) and a number of circumferentially arranged permanent magnets (2), in which an edge section (3a) of the core (3) lies respectively between two permanent magnets (2) that are adjacent to each other in the circumferential direction and the permanent magnets are magnetised so that the hard magnetic poles (2a) with the same magnetisation lie radially on the outside and the edge sections (3a) form pseudomagnetic poles (2b) with a polarity opposite to the hard magnetic poles (2a), **characterised by** the permanent magnets (2) respectively being formed by hot extrusion pressing of a blank (15) in a curved shape so that the volume parts of the centre zone (11)- along a curved path - and the volume parts of the ends - in the formation of edge segments (12) - flow secantially in reference to the rotor (1), so that the magnetic orientation is radial in the centre zone (11) and diametrical in the edge segments (12), the permanent magnets (2) respectively extend over a peripheral angle that is larger than the complementary peripheral angle over which the edge segments (3a) of the core (3) respectively extend, and the flux densities of the hard magnetic (2a) and pseudomagnetic (2b) poles on the outer circumference differ from each other by less than 10%, in particular by less than 5%.

## Revendications

1. Rotor à aimants permanents (1) pour une machine électrique, avec un noyau magnétique doux (3) et un certain nombre d'aimants permanents (2) disposés sur la périphérie, sachant qu'une section de bord (3a) du noyau (3) se trouve respectivement entre deux aimants permanents (2) voisins dans le sens de la circonférence et que les aimants permanents sont magnétisés de telle façon que des pôles magnétiques durs (2a) magnétisés de manière identique se trouvent radialement à l'extérieur et que les sections de bord (3a) forment des pôles pseudo-magnétiques (2b) de polarité opposée aux pôles magnétiques durs (2a), **caractérisé en ce que** chaque aimant permanent (2) est formé par extrusion à chaud d'une pièce pressée (15) en forme d'arc de telle sorte que des sections de volume de la zone centrale (11) sont écoulées le long d'une trajectoire courbe et des sections de volume des extrémités sont écoulées de manière sécante par rapport au rotor (1) en formant des segments de bord (12), de sorte que l'orientation magnétique est radiale dans la zone centrale (11) et diamétrale dans les segments de bord (12), que les aimants permanents (2) s'étendent respectivement sur un angle périphérique plus grand que l'angle périphérique complémentaire sur lequel s'étendent respectivement les segments de bord (3a) du noyau (3), et que les densités de flux des pôles magnétiques durs (2a) et pseudo-magnétiques (2b) diffèrent les unes des autres sur la périphérie extérieure de moins de 10%, en particulier de moins de 5%.

2. Rotor à aimants permanents (1) selon la revendication 1, **caractérisé en ce que** les aimants permanents (2) sont disposés sur la surface du noyau (3).

3. Rotor à aimants permanents (1) selon la revendication 1 ou 2, **caractérisé en ce que** les aimants permanents (2) présentent une forme de base correspondant essentiellement à la forme d'un segment d'anneau circulaire.

4. Rotor à aimants permanents (1) selon la revendication 3, **caractérisé en ce que** les aimants permanents (2) sont déformés par une force de pression radiale de telle sorte qu'ils s'écoulent du moins par sections au moins dans le sens de la périphérie.

5. Rotor à aimants permanents (1) selon l'une des revendications précédentes, **caractérisé en ce que** la pièce pressée (15) présente un contours en forme d'arc.

6. Rotor à aimants permanents (1) selon l'une des revendications précédentes, **caractérisé en ce que** les aimants permanents (2) s'étendent sur un angle périphérique de plus de 90°, plus particulièrement 120° et les sections de bords (3a) s'étendent sur une section de bord périphérique complémentaire de moins de 90°, plus particulièrement d'au maximum 60°.

7. Rotor à aimants permanents (1) selon l'une des revendications précédentes, **caractérisé en ce que** les aimants permanents (2) s'étendent radialement vers l'extérieur sur un angle périphérique extérieur(α, δ) plus grand que l'angle périphérique intérieur (y), sur lequel ils s'étendent radialement vers l'intérieur.

8. Rotor à aimants permanents (1) selon la revendication 7, **caractérisé en ce que** les faces orientées (6) dans le sens de la périphérie vers le noyau (3) des segments de bord (12) sont sur un même plan parallèle à un plan axial passant par l'axe du rotor (7).

9. Rotor à aimants permanents (1) selon l'une des revendications précédentes, **caractérisé en ce que** l'épaisseur radiale des aimants permanents (2) dans la zone centrale (11), vue dans le sens de la périphérie, est plus petite qu'au-delà de cette zone.

10. Rotor à aimants permanents (1) selon la revendication 9, **caractérisé en ce qu'** un cercle décrivant le rayon intérieur des aimants permanents (2) présente un centre décalé radialement vers l'extérieur par rapport au centre d'un cercle décrivant le rayon extérieur des aimants permanents (2).

11. Rotor à aimants permanents (1) selon l'une des revendications précédentes, **caractérisé en ce que** le noyau (3) est formé d'un bloc de tôles individuelles, plus particulièrement des tôles de fer.

12. Rotor à aimants permanents (1) selon l'une des revendications précédentes, **caractérisé en ce que** l'arbre du rotor (4) est en céramique ou un métal non-magnétique.

13. Rotor à aimants permanents (1) selon l'une des revendications précédentes, **caractérisé en ce que** les aimants permanents (2) à leurs extrémités présentent radialement vers l'extérieur des aplatissements (8) de sorte que la jonction au noyau (3) se fait par formation d'un niveau.

14. Moteur électrique à enroulements concentrés **caractérisé par** un rotor à aimants permanents (1) selon l'une des revendications 1 à 14, dont le nombre d'aimants permanents (2) est inférieur au nombre de d'enroulements.

15. Moteur électrique selon la revendication 14, **caractérisé en ce qu'**il est commuté électroniquement.

16. Pompe centrifuge avec un groupe de pompe et un moteur électrique l'entraînant, **caractérisé par** un moteur électrique selon l'une des revendications 14 ou 15.

17. Procédé de construction d'un rotor à aimants permanents (1) pour une machine électrique, avec un noyau magnétique doux (3) et un certain nombre d'aimants permanents (2) disposés sur la périphérie, sachant qu'une section de bord (3a) du noyau (3) se trouve respectivement entre deux aimants permanents (2) voisins dans le sens de la circonférence et que les aimants permanents sont magnétisés de telle façon que des pôles magnétiques durs (2a) magnétisés de manière identique se trouvent radialement à l'extérieur et que les sections de bord (3a) forment des pôles pseudo-magnétiques (2b) de polarité opposée aux pôles magnétiques durs (2a), **caractérisé en ce que** chaque aimant permanent (2) est formé par extrusion à chaud d'une pièce pressée (15) en forme d'arc de telle sorte que des sections de volume de la zone centrale (11) s'écoulent le long d'une trajectoire courbe et des sections de volume des extrémités s'écoulent de manière sécante par rapport au rotor (1) en formant des segments de bord (12), de sorte que l'orientation magnétique est radiale dans la zone centrale (11) et diamétrale dans les segments de bord (12), que les aimants permanents (2) s'étendent respectivement sur un angle périphérique plus grand que l'angle périphérique complémentaire sur lequel s'étendent respectivement les segments de bord (3a) du noyau (3), et que les densités de flux des pôles magnétiques durs (2a) et pseudo-magnétiques (2b) diffèrent les unes des autres sur la périphérie extérieure de moins de 10%, en particulier de moins de 5%.
